# EUROPÄISCHE PATENTSCHRIFT

(11) **EP 0 498 955 B1**
(45) Veröffentlichungstag und Bekanntmachung des Hinweises auf die Patenterteilung: **03.04.1996**
(21) Anmeldenummer: 91121126.6
(22) Anmeldetag: 10.12.1991
(51) Int. Cl.: G07B 17/00, G07F 7/08

(54) **Verfahren und Anordnung zum Versenden elektronisch gespeicherter Briefinhalte**
Method and device for sending electronically memorized letter contents
Procédé et dispositif pour expédier le contenu de lettres mémorisé électroniquement

(30) Priorität: 17.01.1991 DE 4101440
(43) Veröffentlichungstag der Anmeldung: 19.08.1992
(73) Patentinhaber: Francotyp-Postalia GmbH, D-16547 Birkenwerder (DE)
(72) Erfinder: Dietrich, Klaus, W-1000 Berlin 28 (DE); Günther, Stephan, W-1000 Berlin 28 (DE); Knoth, Norbert, W-1000 Berlin 41 (DE); Miehe, Friedrich-Viktor, W-1000 Berlin 28 (DE); Thiel, Wolfgang, Dr., W-1000 Berlin 61 (DE)

(56) Entgegenhaltungen:
- EP-A- 0 193 635
- EP-A- 0 264 502
- EP-A- 0 338 108
- FR-A- 2 613 158
- US-A- 4 106 060

## Beschreibung

Die Erfindung bezieht sich auf ein Verfahren und eine Anordnung zum Versenden elektronisch gespeicherter Briefinhalte und/oder Daten auf flachen Informationsträgern, wie beispielsweise Chipkarten, die einem postalischen Freimachungszwang unterliegen.

Elektronisch gespeicherte, gegebenenfalls zusätzlich codierte Briefinhalte, die beispielsweise von einem Personalcomputer über eine an diesen angeschlossene Schreib-Leseeinrichtung auf eine Chipkarte ausgegeben und in dieser gespeichert werden, können in herkömmlicher Form in einem Umschlag versendet werden. Der Versand von Chipkarten kann der Übermittlung von Informationen dienen, aber auch der einmaligen Zustellung der Chipkarte an Personen, um sie diesen verfügbar zu machen. Zum Versenden von Serienbriefen sind abhängig von der Sende- bzw. Beförderungsart und der Adresse unterschiedliche Frankierwerte zur Freimachung erforderlich, die in herkömmlicher Weise durch Bedienungspersonal in eine Frankiermaschine einzugeben wären.

Der Erfindung lag die Aufgabe zugrunde, ein Verfahren und eine Anordnung zu entwickeln, die das automatische Frankieren von Versandstücken mit elektronisch gespeicherten Briefinhalten ermöglichen.

Diese Aufgabe ist durch die Merkmale des Anspruches 1 bzw. 9 gelöst.

Diese Versanddaten bestehen zumindest aus der Adresse des Empfängers und können darüber hinaus auch die Versandart, wie Luftpost, Eilbrief etc., und das Werbefeld umfassen.

Weitere vorteilhafte Merkmale sind Gegenstand der Unteransprüche.

Der Vorteil der Erfindung liegt in einer automatischen Frankierung und Versendung von Trägern elektronisch gespeicherter Briefinhalte.

Anhand einer Zeichnung wird die Erfindung nachfolgend näher erläutert.

Der beispielsweise mit einem Personalcomputer PCA des Senders erzeugte Briefinhalt wird über ein Schreib-Lesemodul SL, das über eine Standardschnittstelle mit dem Personalcomputer PCA verbunden ist, in einen Informationsträger IC übermittelt. Derartige Informationsträger IC sind beispielsweise als elektronische Notizbücher, Patientenpaß oder Abbuchungskarte bekannt. Dieser Briefinhalt kann aus Texten, Datenbankauszügen, Programmdateien oder anderen elektronisch speicherbaren Informationen bestehen. Das Schreib-Lesemodul SL kann als separates Gerät ausgeführt und über eine Standardschnittstelle mit dem Personalcomputer PCA verbunden oder aber in ihm integriert sein.

Die zumindest aus einer Adresse bestehenden Versanddaten werden synchron zur Ausgabe des Briefinhaltes an eine an den Personalcomputer PCA angeschlossene Frankiereinrichtung FE übertragen. Diese Adressdaten können beispielsweise einer im Personalcomputer PCA gespeicherten und verwalteten Adressdatenbank entstammen. Sie können auch durch ein Textverarbeitungsystem eingegeben und als Versanddaten besonders gekennzeichnet werden. Zu diesen Adreßdaten können auf gleiche Weise Daten hinzugefügt werden, welche in Form eines Werbefeldes den Absender kennzeichnen. Wird eine besondere Versandart gewünscht, z. B. Luftpost, Eilbrief etc., können diese Daten gleichfalls die Versanddaten ergänzen. Die Versanddaten werden mit einer gespeicherten Portogebührentabelle verglichen und ein entsprechender Frankierwert berechnet. Die Einbeziehung eines Gewichtswertes in die Portoberechnung entfällt, da der Informationsträger IC unabhängig vom Umfang des gespeicherten Briefinhaltes stets das gleiche Gewicht aufweist.

Die Frankiereinrichtung FE besteht aus einer gesicherten Portobox, die das Buchungsmittel BM und ein Druckwerk DW enthält. Das Buchungsmittel BM bucht in bekannter Weise den Frankierwert von einem Portogebührenguthaben ab. Das Portogebührenguthaben kann im Bedarfsfall mittels der gebräuchlichen Verfahren, wie zum Beispiel Fernwertvorgabe, nachgeladen werden. In einer speziellen Ausführungsvariante erfolgt die Buchung des Frankierwertes mittels eines kartenförmigen elektronischen Datenträgers, der zu diesem Zweck in eine Lese-Schreibeinrichtung der Frankiereinrichtung FE eingeführt wird, wobei die Abbuchung vom Portoguthaben des Datenträgers vorgenommen wird. Auf dem Datenträger kann auch das Werbefeld gespeichert sein, das in die Frankiereinrichtung FE geladen und von dieser ausdruckbar ist. Die derart errechneten Gebühren werden zusammen mit den Daten für Versandart und dem Werbefeld an das zum Drucken des Frankierabdruckes genutzte Druckwerk DW übertragen. Die Frankiereinrichtung FE kann als separates Gerät ausgeführt oder mit dem Personalcomputer PCA integriert sein. Letztere Variante ist in der Patentanmeldung DE-40 18 166 der Anmelderin dargestellt.

Bei konventioneller Versendung des Informationsträger IC mit einem Briefkuvert wird mittels des Druckwerkes DW ein Frankierabdruck auf dem Umschlag ausgeführt. Eine angeschlossene Zuführ-, Kuvertier- und Schließstation ZKS dient der weiteren automatischen Verarbeitung.

In einer anderen Ausführungsvariante bilden das Schreib-Lesemodul SL, die Frankiereinrichtung FE und die Kuvertierstation ZKS eine konstruktive Einheit. Diese ist über eine serielle Schnittstelle mit dem Personalcomputer PCA verbunden. Der Anwender führt in diesem Fall den zu beschreibenden Informationsträger IC in die Einheit ein. Der zu versendende Briefinhalt und die Versanddaten werden mittels des Personalcomputers PCA erzeugt und über die serielle Schnittstelle, z.B. eine V 24-Schnittstelle an die Einheit übertragen. Ausgegeben wird von der Einheit ein frankiertes Kuvert, das den beschriebenen Informationsträger IC enthält. Bei Verwendung eines Fensterkuverts entfällt die Notwendigkeit eines zusätzlichen Adreßdruckes und das Postgut ist in dieser Form bereits versandfertig.

In einer weiteren Ausführungsvariante wird von dem Druckwerk DW ein Frankierstreifen bedruckt, der auf den Informationsträger IC haftend aufgebracht wird.

Weiterhin ist das direkte Bedrucken eines dafür präparierten Teiles der Oberfläche des Informationsträgers IC mit den Frankierdaten und den Adreßdaten möglich, wobei die Adreßdaten auch zur automatischen Sortierung als Strichcode druckbar sind.

Steuersignale, die von einem speziellen Steuerpragramm des Personalcomputers PCA generiert werden, sichern die Synchronität der Ausgabe der Daten des Briefinhaltes, des Frankierens des Versandstückes und ggf. das automatische Kuvertieren des betreffenden Informationsträgers IC.

Ferner wird in einer Ausführungsvariante die zum Berechnen des Frankierwertes ausgelesene Adreßinformation zusätzlich zu dem Frankierabdruck ausgedruckt. Die Frankiereinrichtung FE muß zu diesem Zweck mit einem Druckwerk ausgerüstet sein, das zum Drucken einer postalischen Adresse geeignet ist. Dafür kann beispielsweise ein Thermotransferdruckwerk mit einer Druckbreite, die sowohl den Frankier- als auch den Adreßabdruck einschließt, verwendet werden. Alternativ ist auch die Übertragung der Adreßdaten an ein spezielles Adreßdruckgerät möglich.

Der Transportdienst befördert den Informationsträger IC zum Empfänger. Dort wird mittels eines an einen Personalcomputer PCE gekoppeltes Lese-Schreibmodul LS der Informationsinhalt aus dem Informationsträger IC gelesen.

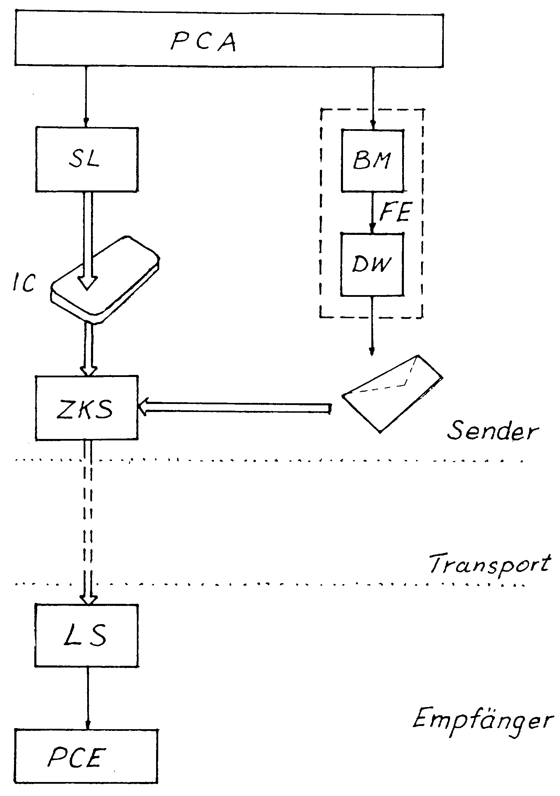

## Patentansprüche

1. Verfahren zum Versenden elektronisch gespeicherter Briefinhalte und/oder Daten in flachen Informationsträgern, insbesondere Chipkarten, die einem postalischen Freimachungszwang unterliegen, **dadurch gekennzeichnet**,
a) daß der Briefinhalt aus einem Personalcomputer (PCA) mittels eines Schreib-/Lesemoduls (SL) in den Speicher des Informationsträger (IC) übertragen wird,
b) daß synchron zu dieser Übertragung die zugehörigen Versanddaten vom Personalcomputer (PCA) an eine Frankiereinrichtung (FE) übertragen werden,
c) daß die Frankiereinrichtung (FE) auf der Basis dieser Versanddaten die Portogebühren zum Versenden des Informationsträgers (IC) verbucht,
d) daß die Frankiereinrichtung (FE) Steuerdaten zum Drucken eines Frankierabdruckes an einen Drucker (DW) überträgt und
e) daß auf jedem zum Versand des betreffenden Informationsträgers (IC) bestimmten Versandstück ein Frankierabdruck vorgenommen wird.

2. Verfahren nach Anspruch 1, **dadurch gekennzeichnet**, daß die Frankiereinrichtung (FE) den Frankierabdruck auf ein Kuvert druckt.

3. Verfahren nach Anspruch 1, **dadurch gekennzeichnet**, daß die Frankiereinrichtung (FE) den Frankierabdruck auf einen Streifen druckt.

4. Verfahren nach Anspruch 1, **dadurch gekennzeichnet**, daß die Frankiereinrichtung (FE) den Frankierabdruck auf einen Teil der Oberfläche des Informationsträgers (IC) druckt.

5. Verfahren nach Anspruch 1 und 2, **dadurch gekennzeichnet**, daß der Informationsträger (IC) und das zum Versand jedes Informationsträgers (IC) bestimmte Kuvert einer Zuführ-, Kuvertier- und Schließstation (ZKS) zugeführt und von dieser automatisch kuvertiert wird.

6. Verfahren nach Anspruch 1, **dadurch gekennzeichnet**, daß zusätzlich zum Frankierabdruck die Adresse auf das Versandstück gedruckt wird.

7. Verfahren nach Anspruch 6, **dadurch gekennzeichnet**, daß die Adresse als Strichcode gedruckt wird.

8. Verfahren nach Anspruch 6, **dadurch gekennzeichnet**, daß die Adreßdaten an eine spezielle Adreßdruckeinrichtung übergeben und von dieser ausgedruckt werden.

9. Anordnung, zur Durchführung des Verfahrens nach Anspruch 1 zum Versenden elektronisch gespeicherter Briefinhalte und/oder Daten in flachen Informationsträgern,insbesondere Chipkarten, die einem postalischen Freimachungszwang unterliegen, mit einer einen Drucker aufweisenden Frankiereinrichtung, dadurch **gekennzeichnet**,
- daß ein Schreib-/Lesemodul (SL) für den flachen elektronischen Informationsträger (IC), insbesondere Chipkarte, an einen Personalcomputer (PCA) angeschlossen ist und Mittel im Personalcomputer (PCA) vorgesehen sind, damit der Briefinhalt aus dem Personalcomputer (PCA) mittels des Schreib-/Lesemoduls (SL) in einen Speicher des vorgenannten elektronischen Informationsträgers (IC) übertragen wird,
- daß Mittel im Personalcomputer (PCA) vorgesehen sind, die die zugehörigen Versanddaten vom Personalcomputer (PCA) an eine Frankiereinrichtung (FE) synchron zur vorgenannten Übertragung des Briefinhaltes übertragen, und
- daß an den Personalcomputer (PCA) die Frankiereinrichtung (FE) angeschlossen ist, welche auf der Basis vorgenannter Versanddaten die Portogebühren zum Versenden des Informationsträgers (IC) verbucht und welche Steuerdaten zum Drucken eines Frankierabdruckes an den Drucker (DW) überträgt, um auf jedem zum Versand des betreffenden Informationsträgers (IC) bestimmten Versandstück einen Frankierabdruck vorzunehmen.

10. Anordnung nach Anspruch 9, **dadurch gekennzeichnet**, daß das Schreib-/Lesemodul (SL) in den Personalcomputer (PCA) integriert ist.

11. Anordnung nach Anspruch 9, **dadurch gekennzeichnet**, daß die Frankiereinrichtung (FE) in den Personalcomputer (PCA) integriert ist.

12. Anordnung nach Anspruch 9, **dadurch gekennzeichnet**, daß das Schreib-/Lesemodul (SL) und die Frankiereinrichtung (FE) als konstruktive Einheit ausgeführt sind.

13. Anordnung nach Anspruch 9, **dadurch gekennzeichnet**, daß das Schreib-/Lesemodul (SL), die Frankiereinrichtung (FE) und eine daran angeschlossene Zuführ-, Kuvertier- und Schließstation (ZKS) als konstruktive Einheit ausgeführt sind.

14. Anordnung nach Anspruch 9 oder 13, **dadurch gekennzeichnet**, daß Mittel im Personalcomputer (PCA) vorgesehen sind, die die zugehörigen Versanddaten vom Personalcomputer (PCA) an eine Frankiereinrichtung (FE) synchron zur vorgenannten Übertragung des Briefinhaltes übertragen und zusätzlich die Adreßdaten an eine spezielle Adreßdruckeinrichtung übergeben, damit die Adreßdaten von der Adreßdruckeinrichtung auf ein Versandstück (Kuvert) ausgedruckt werden.

15. Anordnung nach Anspruch 14, **dadurch gekennzeichnet**, daß Mittel im Personalcomputer (PCA) vorgesehen sind, damit die Adresse als Strichcode gedruckt wird.

16. Anordnung nach Anspruch 9 oder 13, **dadurch gekennzeichnet**, daß Mittel im Personalcomputer (PCA) vorgesehen sind, die die zugehörigen Versanddaten vom Personalcomputer (PCA) an eine Frankiereinrichtung (FE) synchron zur vorgenannten Übertragung des Briefinhaltes übertragen und daß zusätzlich zum Frankierabdruck die Adresse auf das Versandstück gedruckt wird.

17. Anordnung nach Anspruch 16, **dadurch gekennzeichnet**, daß Mittel im Personalcomputer (PCA) oder in der Frankiereinrichtung (FE) vorgesehen sind, damit die Adresse als Strichcode gedruckt wird.

## Claims

1. Procedure for the mailing of electronically stored contents of letters and/or data in flat information carriers, especially chip cards, which are subject to postal franking requirements, **characterized by** the fact
a) that the contents of the letter are transmitted from a personal computer (PC) to the memory of the information carrier (IC) by means of a write/read module;
b) that simultaneously with this transmission the respective mailing data are transmitted from the personal computer (PC) to a franking unit;
c) that the franking unit records the postage fees for the mailing of this information carrier (IC) on the basis of these mailing data;
d) that the franking unit transmits control data to a printer for printing a franking printout, and
e) that every postal item designed for the mailing of such an information carrier (IC) is provided with a franking imprint.

2. Provision according to claim No. 1 **characterized by** the franking unit printing the franking imprint onto an envelope.

3. Provision according to claim No. 1 **characterized by** the franking unit printing the franking stamp onto a stripe.

4. Provision according to claim No. 1 **characterized by** the franking unit printing the franking imprint upon a part of a surface of the information carrier (IC).

5. Provision according to claims No.1 and 2 **characterized by** the information carrier (IC) and the envelope earmarked for the mailing of each information carrier (IC) being fed to a feeder, enveloping, and sealing station for automatic completion.

6. Provision according to claim No. 1 **characterized by** the address being printed upon the item to be mailed in addition to the franking stamp printout.

7. Provision according to claim No. 6 **characterized by** the address being printed as a bar code.

8. Provision according to claim No. 6 **characterized by** the address data being transmitted to a special address printing device for the printout.

9. Provision for the execution or the procedure according to claim No.1 for the transmission of electronically stored contents of letters and/or data in flat information carriers, especially chip cards, which are subject to mandatory postage requirements with a franking device containing a printer, **characterized by**
- a write/read module for the flat electronic information carrier (IC), especially a chip card, being connected with a personal computer (PC) with features provided within the personal computer (PC) to transmit the contents of the letter from the personal computer to a memory of the above mentioned information carrier (IC) by means of a write/read module;
- ways and means being provided in the personal computer (PC) for transmitting the pertinent mailing data from the personal computer (PC) to a franking unit simultaneously with the above mentioned transmission of the contents of the letter; and
- the franking unit being connected with the personal computer (PC) which, on the basis of the above mentioned mailing data, records the postage fees for the mailing of the information carriers (IC) and transmits the control data to the printer for a printout of the franking stamp in order to provide for a franking printout upon every item to be mailed for the shipment of the information carrier involved.

10. Provision according to claim No. 9 **characterized by** the write/read module being integrated into the personal computer (PC).

11. Provision according to claim No. 9 **characterized by** the franking unit being integrated into the personal computer (PC).

12. Provision according to claim No. 9 **characterized by** the write/read module and the franking unit being designed as an integral unit.

13. Provision according to claim No. 9 **characterized by** the write/read module, the franking unit, and a feeder, an enveloping, and a sealing station attached to the latter being designed as a single integrated unit.

14. Provision according to claims No. 9 or 13 **characterized by** ways and means being provided in the personal computer (PC) for the transmission of the pertinent mailing data from the personal computer (PC) to a franking unit simultaneously with the above mentioned transmission of the contents of the letter, additionally transmitting the address data to a special address printing device to insure that the address data are printed upon an item to be mailed (envelope) by the address printing device.

15. Provision according to claim No. 14 **characterized by** ways and means being provided in the personal computer (PC) for printing the address as a bar code.

16. Provision according to claims No.9 or 13 **characterized by** ways and means being provided in the personal computer (PC) for transmitting the pertinent mailing data from the personal computer (PC) to a franking unit simultaneously with the above mentioned transmission of the contents of the letter, printing the address upon the item to be mailed in addition to the franking stamp printout.

17. Provision according to claim No. 16 **characterized by** ways and means being provided in the personal computer (PC) or in the franking unit for printing the address as a bar code.

## Revendications

1. Opération pour expédier des contenus de lettres gardés électroniquement et/ou des données dans des porteurs d'informations plats, en particulier des cartes à puce, qui doivent être obligatoirement affranchies par la poste, caractérisée (cette opération) par ce que:
a) le contenu de la lettre sera transmis dans la sauvegarde du porteur d'informations (IC) à partir d'un ordinateur personnel (PCA) par le moyen d'un module d'écriture-de lecture (SL),
b) en même temps que ce transfert les données d'expédition correspondantes seront transmises de l'ordinateur personnel (PCA) à un dispositif d'affranchissement (FE),
c) le dispositif d'affranchissement (FE), se basant sur ces données d'expédition, passe en compte les frais de port pour envoyer le porteur d'informations (IC),
d) le dispositif d'affranchissement (FE) transmet des directives pour imprimer un affranchissement à une imprimante (DW) et que
e) sur chacun des envois destinés à l'expédition du porteur d'informations en question (IC) on mettra une empreinte d'affranchissement.

2. Opération d'après la revendication 1, caractérisée par ce que le dispositif d'affranchissement (FE) imprime l'empreinte sur une enveloppe.

3. Opération d'après la revendication 1, caractérisée par ce que le dispositif d'affranchissement (FE) imprime l'empreinte sur une bande.

4. Opération d'après la revendication 1, caractérisée par ce que le dispositif d'affranchissement (FE) imprime l'empreinte sur une partie de la surface du porteur d'informations (IC).

5. Opération d'après les revendications 1 et 2, caractérisée par ce que le porteur d'informations (IC) et l'enveloppe destinée à l'envoi de chaque porteur d'informations (IC) seront amenés à une station d'arrivée, de mise sous enveloppe et de fermeture (ZKS), avec mise sous enveloppe automatique à cet endroit.

6. Opération d'après la revendication 1, caractérisée par ce que l'adresse sera imprimée en plus de l'empreinte d'affranchissement sur la pièce à envoyer.

7. Opération d'après la revendication 6, caractérisée par ce que l'adresse sera imprimée en code-barres.

8. Opération d'après la revendication 6, caractérisée par ce que les données concernant l'adresse seront remises à un dispositif spécial d'impression d'adresses et imprimées par ce dispositif.

9. Indication pour effectuer l'opération d'après la revendication 1, pour expédier des contenus de lettres sauvegardés électroniquement et/ou des données dans des porteurs d'informations plats, en particulier des cartes à puce, qui dépendent obligatoirement d'un affranchissement postal, à l'aide d'un dispositif d'affranchissement ayant une imprimante, caractérisée par ce que
- un module d'écriture-de lecture (SL) (pour le porteur d'informations (IC) électronique plat, et en particulier la carte à puce) est connecté à un ordinateur personnel (PCA) et que des moyens sont prévus dans l'ordinateur personnel (PCA) afin que le contenu de la lettre soit transmis de l'ordinateur personnel (PCA) par le module d'écriture-de lecture (SL) dans une sauvegarde du porteur d'informations (IC) électronique précité.
- des moyens sont prévus dans l'ordinateur personnel (PCA) qui transmettent les données d'expédition correspondantes de l'ordinateur personnel (PCA) à un dispositif d'affranchissement (FE) en même temps que se fait la transmission du contenu de la lettre, et
- le dispositif d'affranchissement (FE) est connecté à l'ordinateur personnel (PCA), lequel dispositif prend en compte les frais de port, sur la base des données d'expédition mentionnées plus haut, pour envoyer le porteur d'informations (IC) et aussi lequel dispositif transmet à l'imprimante (DW) les directives pour imprimer une empreinte d'affranchissement, afin d'appliquer une empreinte d'affranchissement sur chacun des envois du porteur d'informations correspondant (IC), destiné à être expédier.

10. Indication d'après la revendication 9, caractérisée par ce que le module d'écriture-de lecture (SL) est intégré dans l'ordinateur personnel (PCA).

11. Indication d'après la revendication 9, caractérisée par ce que le dispositif d'affranchissement (FE) est intégré dans l'ordinateur. personnel (PCA).

12. Indication d'après la revendication 9, caractérisée par ce que le module d'écriture-de lecture (SL) et le dispositif d'affranchissement (FE) forment une unité constructive.

13. Indication d'après la revendication 9, caractérisée par ce que le module d'écriture-de lecture (SL), le dispositif d'affranchissement (FE) et une station de conduite,mise sous enveloppe et fermeture (ZKS), rattachée au dispositif, forment une unité constructive.

14. Indication d'après les revendications 9 et 13, caractérisée par ce que des moyens sont prévus dans l'ordinateur personnel (PCA) qui transmettent les données d'expédition correspondantes de l'ordinateur personnel (PCA) à un dispositif d'affranchissement (FE) en même temps que se fait le transfert mentionné plus haut du contenu de la lettre et en plus qui passent les données d'adresses à un dispositif spécial d'impression d'adresses, afin que les données d'adresses soient imprimées par le dispositif d'impression d'adresses sur la pièce à envoyer (enveloppe).

15. Indication d'après la revendication 14, caractérisée par ce que des moyens sont prévus dans l'ordinateur personnel (PCA) afin d'imprimer l'adresse en code-barres.

16. Indication d'après les revendications 9 et 13, caractérisée par ce que des moyens sont prévus dans l'ordinateur personnel (PCA) qui transmettent les données d'expédition correspondantes de l'ordinateur personnel (PCA) à un dispositif d'affranchissement (FE) en même temps que se fait le transfert mentionné plus haut du contenu de la lettre et en plus de l'empreinte d'affranchissement, l'adresse est aussi imprimée sur la pièce à expédier.

17. Indication d'après la revendication 16, caractérisée par ce que des moyens sont prévus dans l'ordinateur personnel (PCA) ou dans le dispositif d'affranchissement (FE) afin d'imprimer l'adresse en code-barres.
